# EUROPÄISCHE PATENTANMELDUNG

(11) **EP 0 608 517 A1**
(43) Veröffentlichungstag der Anmeldung: **03.08.1994**
(21) Anmeldenummer: 93119488.0
(22) Anmeldetag: 03.12.1993
(51) Int. Cl.: G02B 6/44

(54) **Gehäuse für passive optische Komponenten**

(30) Priorität: 28.01.1993 DE 4302837
(71) Anmelder: KRONE Aktiengesellschaft, D-14160 Berlin-Zehlendorf (DE)
(72) Erfinder: Grugel, Peter, D-12207 Berlin (DE); Oehlkers, Paul, D-12169 Berlin (DE); Bernhardt, Susanne, D-10707 Berlin (DE); Struss, Martin, D-10825 Berlin (DE); Rund, Dietrich, Dr., D-12207 Berlin (DE)

(57) **Zusammenfassung**

Die Erfindung bezieht sich auf ein Gehäuse für passive optische Komponenten, wie Glasfasern, Koppler,Spleiße.

Die Aufgabe, ein Gehäuse zu entwickeln, in welchem unter Beachtung der üblichen Einbaumaße Koppler- und Spleißablagen zur variablen Bestückung angeordnet werden können und welches unter Einhaltung der Mindestbiegeradien eine übersichtliche, servicefreundliche und sichere Führung der Glasfasern gewährleistet, wird dadurch gelöst, daß an einer Stirnseite 4 des Gehäuseunterteiles 2 zugentlastende Einzelführungen 5,6 für die Glasfasern und eine in den Boden integrierte S-förmige Nut 20 vorgesehen sind, daß Aufnahmen 12,13 für Koppler 45 und Spleiße 46 im Zentralbereich 11 durch mit dem Boden 10 verbundene Führungen 24,33 gebildet sind. Zwischen den Seitenwänden 27, 35 und den Aufnahmen 12,13 sind Faserführungs-Kanäle 26, 36 zur Gewinnung der erforderlichen Reservelängen vorgesehen. Im Bereich der Aufnahmen 12, 13 sind quer zur parallelen Führung 24 der Koppler 45 und der Spleiße 46 durchgehende Aushebeöffnungen 30,38 in den Boden 10 eingebracht.

## Beschreibung

Die Erfindung bezieht sich auf ein Gehäuse für passive optische Komponenten gemäß dem Oberbegriff des Anspruches 1.

Aus der DE 34 13 401 A1 ist eine Aufnahme für die Spleißverbindungen von Lichtwellenleiterkabeln bekannt. Diese Aufnahme wird durch ein schachtelartiges, oben offenes flaches Gehäuse gebildet, das an einer Stirnseite nahe den Seitenwandungen mit Einlässen für die Kabel und an der offenen Deckseite mit von den Seitenwandungen nach innen ragenden laschenartigen Niederhaltern versehen ist. Zentrisch am Boden ist ein Stützteil angeordnet, das einen blattartigen Niederhalter trägt. Ferner ist eine Spleißhalterung am Boden befestigt, in die die einzelnen Spleißstellen geordnet abgelegt sind. Der blattartige Niederhalter überdeckt den Bereich der Spleißhalterung. Zum Stapeln der Gehäuse sind aus dem Gehäuse an den Eckpunkten herausragende Nocken angeordnet, die in entsprechende Eckteile des oben offenen Gehäuses eingreifen.

Nachteilig ist bei diesem bekannten Gehäuse, daß die Glasfasern nur als Lichtwellenleiterkabel gebündelt in das Gehäuse eingeführt werden können. Die Zugentlastung der einzelnen Fasern ist im Bündel unzuverlässig. Die Führung der Glasfasern im Gehäuse ist nicht sicher gewährleistet und an den Seitenwänden unzureichend gesichert.

Der Erfindung liegt von daher die Aufgabe zugrunde, ein Gehäuse der gattungsgemäßen Art zu entwickeln, welches unter Einhaltung der üblichen Einbaumaße eine Aufnahme für Koppler und Spleiße zur variablen Bestückung ermöglicht und unter Einhaltung der Mindestbiegeradien eine übersichtliche, servicefreundliche und sichere Führung der Glasfasern gewährleistet.

Zur Lösung dieser Aufgabe sieht die Erfindung die kennzeichnenden Merkmale des Anspruches 1 vor. Die gewählte Anordnung der Aufnahmen für Koppler und Spleiße im Zentralbereich des Gehäuseunterteiles in Verbindung mit den kammartigen Einzelein- und Einzelausführungen an der Stirnseite des Gehäuseunterteils sowie in Verbindung mit der räumlichen Aufteilung des Gehäuseunterteiles erlauben eine variable Bestückung mit unterschiedlichen Kopplern und Spleißen. Die Anordnung einer S-förmigen Nut erlaubt es, daß alle Glasfasern über die Einzelausführungen herein- und herausgeführt werden. Durch die beidseitige Anordnung von Bodendurchführungen an den Stirnseiten und deren Abflachung ist eine Glasfaserführung in unterschiedlichen Wickelrichtungen, entsprechend dem jeweiligen Bedarf, unter Einhaltung der Mindestbiegeradien möglich. Die Dimensionierung und Gestaltung des Bereiches hinter den Ein- und Ausführungen für die Glasfasern ist für die Erfüllung der Anforderungen bezüglich der Einhaltung der Mindestbiegeradien von Bedeutung. Die äußeren Gehäuseabmessungen sind so gewählt, daß sie den üblichen Einbaubedingungen und Umfeldanforderungen entsprechen, z.B. entspricht das maximale Breitenmaß den Maßen für den Einbau in übliche Baugruppenträger der Datenkommunikation (z.B. 19 Zoll Baugruppenträger). Die Ein- und Ausführungen für die Glasfasern sind so gestaltet, daß jede Faser einzeln herein- und herausgeführt und zugentlastet sowie gekennzeichnet ist. Dadurch wird eine höhere Sicherheit der Zugentlastung erreicht als bei einer Bündeleinführung und dessen Zugentlastung. Die Zugentlastung ist durch die konische Gestaltung der kammartigen Ein- und Ausführungen mit einem Einführungsschlitz, der im Einführungsbereich etwas breiter ist als der Durchmesser der einzuführenden Glasfaser, gegeben. Wenn die Ein- und Ausführungen als gesonderte Bauteile in die Stirnseite des Gehäuseunterteiles eingebracht sind, ist eine an die jeweilig eingesetzten Glasfasern angepaßte Bauform der Schlitze möglich. Durch die Anordnung von Aushebeöffnungen im Bodenbereich des Unterteils quer zur den parallel geführten Aufnahmen für die Koppler und Spleiße können im Servicefall einzelne Koppler und/oder Spleiße herausgelöst werden. Die Anordnung eines umlaufenden Absatzes am Boden und eines Steges an der Oberseite des Gehäuseunterteils erlauben eine Stapelung von Gehäuseunterteilen, bei der die einzelnen Gehäuseunterteile fixiert sind und bei der die Aufbauhöhe reduziert ist. Der formschlüssig und bündig auf dem Gehäuseunterteil aufliegende Deckel bedingt keine zusätzliche Bauhöhe.

Weitere vorteilhafte Ausgestaltungen der Erfindung ergeben sich aus den Unteransprüchen.

Die Erfindung ist nachfolgend anhand eines in den Zeichnungen dargestellten Ausführungsbeispieles näher erläutert. Es zeigen:
- Fig. 1: eine Draufsicht auf das Gehäuseunterteil,
- Fig. 2: eine Untersicht auf den Boden des Gehäuseunterteils,
- Fig. 3: eine Seitenansicht des Gehäuseunterteils im Eingangsbereich,
- Fig. 4: eine Schnittdarstellung entlang der Linie A-F des Gehäuseunterteils,
- Fig. 5: eine schematische Darstellung einer Kopplerkaskade 1 x 8,
- Fig. 6: eine Draufsicht auf ein bestücktes Gehäuseunterteil gemäß der Fig. 1,
- Fig. 7: eine Draufsicht auf ein weiteres bestücktes Gehäuseunterteil gemäß der Fig. 1,
- Fig. 8: eine Draufsicht auf ein bestücktes Gehäuse mit Deckel gemäß der Fig. 1,
- Fig. 9: eine Schnittdarstellung von zwei aufeinander gestapelten Gehäuseunterteilen mit Deckel gemäß der Fig. 8 und
- Fig.10: eine Seitenansicht von zwei aufeinander gestapelten Gehäuseunterteilen gemäß der Fig. 8.

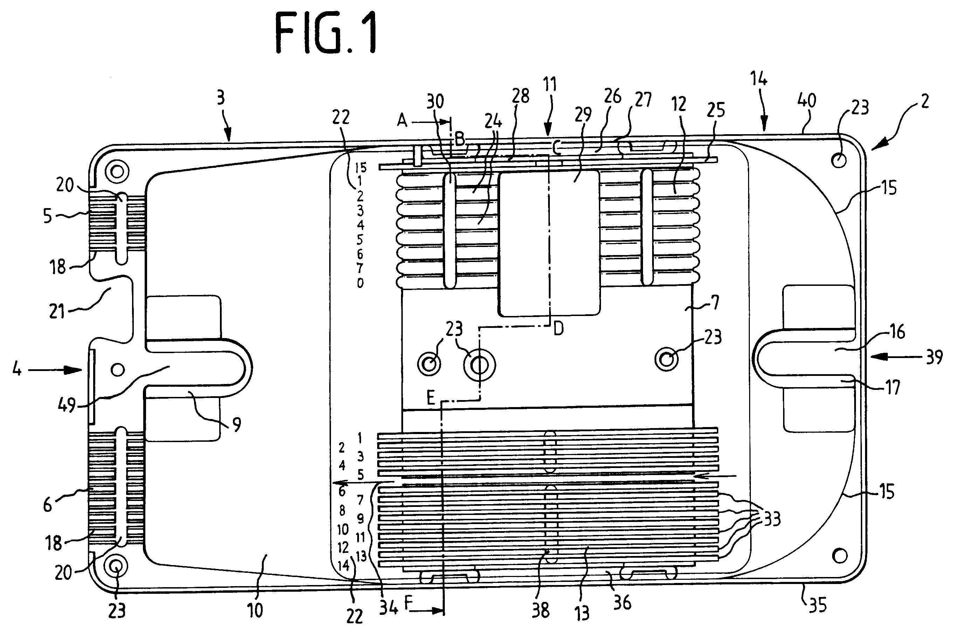

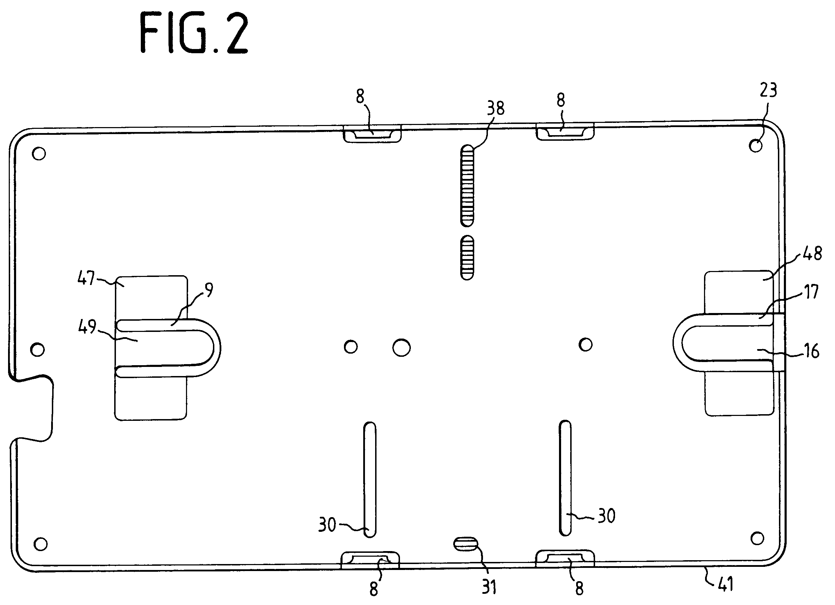

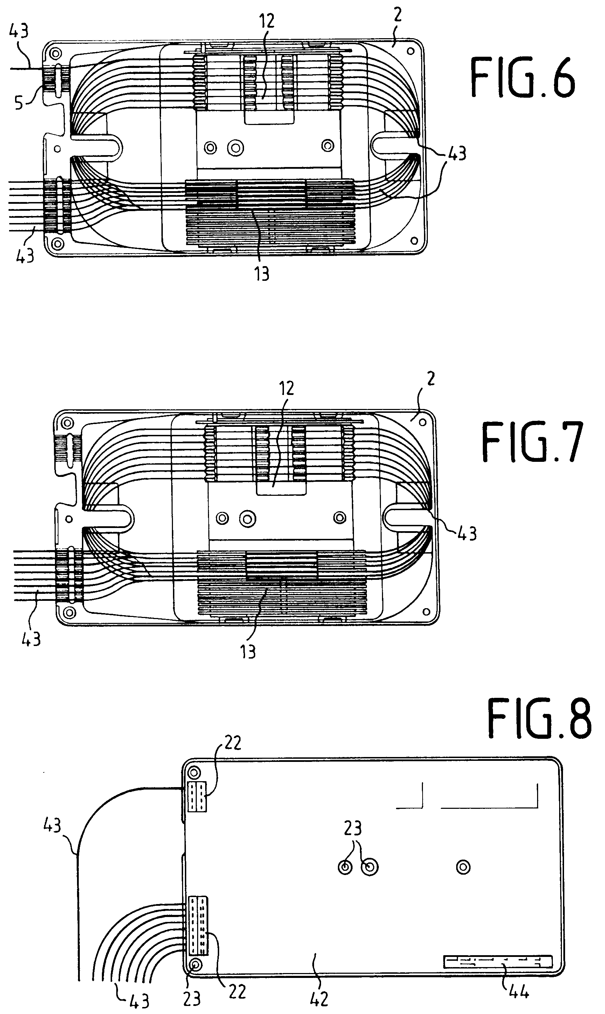

Das Gehäuse 1 zur Aufnahme von passiven optischen Komponenten, wie Glasfasern, Koppler und Spleiße, besteht aus einem Gehäuseunterteil 2 (Fig. 1 und 2) und aus einem nicht näher ausgeführten Deckel 42 (Fig. 8 und 9). Das Gehäuse 1 dient dem Schutz der Verbindungsstellen (Spleißstellen) und der Abzweige (Kopplerstellen) von Glasfaserkabeln sowie der Aufnahme der notwendigen Vorratslängen von Glasfasern in Verbindung mit diesen Stellen. Das Gehäuse 1 ist modular aufgebaut. Je nach Bedarf können eine unterschiedliche Anzahl von Gehäuseunterteilen 2 ineinander gestapelt werden. Die die Gehäuseunterteile 2 verbindenden Glasfasern 43 werden jeweils durch die Gehäuseböden 10 eingeleitet (Fig. 7). Das Gehäuseunterteil 2 ist mit integrierten Aufnahmen 12,13 zur Ablage von Kopplern 45 und Spleißen 46 (Fig.6,7), insbesondere Sandwichspleißen, ausgerüstet. Es ist eine variable Bestückung der Gehäuse 1 mit Kopplern 45 und Spleißen 46 möglich (Fig.6,7). Bei der Endmontage wird das Gehäuseunterteil 2 oder werden mehrere Gehäuseunterteile 2 mit dem Deckel 42 zu einem Gehäuse 1 oder einer Gehäuseeinheit verschraubt (Fig.8 bis 10).

In der Fig. 1 ist die Draufsicht auf das Gehäuseunterteil 2 gezeigt. Das Gehäuseunterteil 2 ist im wesentlichen in einen vorderen Eingangsbereich 3 mit an die Stirnseite 4 integrierten Einzelein- und Einzelausführungen 5,6 für die Glasfasern und einem Niederhalter 49 über einer Bodendurchführung 9 des Unterteils 2, in einen Zentralbereich 11 mit Aufnahmen 12,13 für Koppler 45 und für Spleiße 46 sowie mit einem Stützteil 7 und in einen hinteren Bereich 14 mit bogenförmigen Wandungsteilen 15 zur Führung der Glasfasern sowie einem Niederhalter 16, der über einer Bodendurchführung 17 des Unterteils 2 angeordnet ist, aufgegliedert.

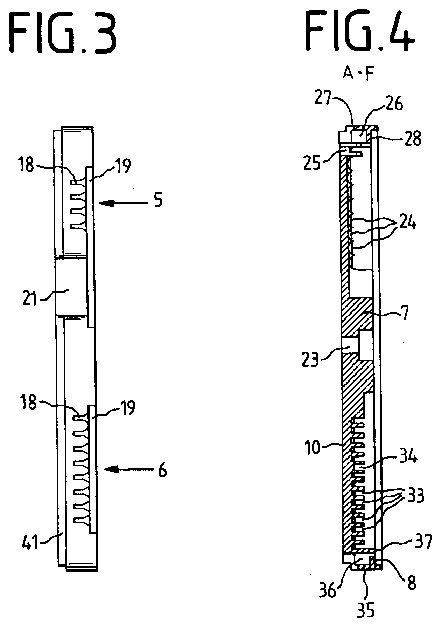

Die Einzeleinführungen 5 für die Glasfasern bestehen entsprechend der Darstellung in der Fig. 3 aus vier Einführungsschlitzen 18 mit Einführungsschrägen 19 in konischer Ausführung von 5°. Die obere Breite der Einführungsschlitze 18 ist geringfügig größer als der Durchmesser der einzuführenden Glasfasern gewählt, so daß die Fasern über ihren Mantel zugentlastet eingelegt sind. Die Elastizität des Fasermantels bewirkt eine zuverlässige Klemmwirkung. Die Einzeleinführungen 5 sind in die Stirnseite 4 des Gehäuseunterteils 2 integriert. Sie können aber auch als gesonderte Bauteile ausgeführt sein und in die Stirnseite 4 eingebracht werden. In gleicher Weise sind die Einzelausführungen 6, hier für acht Glasfasern, aufgebaut. Die Einzelausführungen 6 werden auch zur Einführung von Glasfasern in Verbindung mit der S-förmigen Nut 20 verwendet. Wenn die Glasfasern über die Einzelausführungen 6 eingeführt werden, dann muß die eingeführte Glasfaser durch die S-förmige Nut 20 in die gleiche Wickelrichtung wie die auszuführenden Glasfasern gebracht werden. Die eingeführten und die ausgeführten Glasfasern werden dann über die Einzelausführungen 6 ausgeführt.

Die Bodendurchführungen 9 und 17 des Unterteiles 2 sind an den gegenüberliegenden Seiten von oben und unten abgeflacht und so für eine optimale Führung der Glasfasern ausgebildet. Diesem Ziel dient auch eine in die Stirnseite 4 eingeformte Trapezführung 21 zur Aufnahme und Führung der Glasfasern und die Ausnehmungen 47,48 auf der Unterseite des Bodens 10 ( Fig. 2).

Im Eingangsbereich 3 des Unterteiles 2 sind vor den Aufnahmen 12,13 Kennzeichnungen 22 für die Koppler 45 und die Spleiße 46 aufgebracht.

Die Fig. 4 zeigt in einer Schnittdarstellung den Aufbau des zentralen Bereiches 11. Der zentrale Bereich 11 enthält in der Mitte das Stützteil 7 mit einer S-förmigen Nut 20 und Bohrungen 23,32 (Fig. 1) zur Sicherung der Gehäuse 1 im modularen Aufbau, zur Deckelbefestigung und zur Befestigung an einen nicht dargestellten Baugruppenträger bzw. zur Adaption des Gehäuses 1 an die Einbauumgebung. Die S-förmige Nut 20 ermöglicht eine Richtungsänderung für die Eingangsfaser und dadurch das Zusammenlegen der Glasfasern für Ein- und Ausgänge in einem gemeinsamen Schlitzbereich, beispielsweise gemäß der Fig. 7 in den Bereich der Einzelausführungen 6. Das Stützteil 7 ist in den Boden 10 des Gehäuseunterteils 2 integriert. Anschließend an das Stützteil 7 sind acht Führungsnuten 24 ausgeformt, die die Aufnahme 12 für acht Koppler 45 bilden. Daran anschließend ist eine Führung 25 für einen Spleiß 46 ausgebildet und ein Faserführungs-Kanal 26, welcher von der einen Seitenwand 27 und einem Begrenzungssteg 28 begrenzt und von zwei Niederhaltern 8 überdeckt ist. Die Führungsnuten 24 sind durch eine quer zur Nutenausformung angeordnete Fläche 29 unterbrochen, die der Aufbringung von Klebematerial dient. Die Koppler 45 werden mittels eines Klebstoff-Films sicher in den Nuten 24 fixiert. Ebenfalls quer zur Ausbildung der Nuten 24 sind im Boden 10 des Unterteils 2 durchgehende Aushebeöffnungen 30 über alle Nuten 24 in beiden Nutbereichen angeordnet, über die eine leichte Demontage einzelner Koppler 45 möglich ist. Die Führung 25 weist zur leichten Demontage des darin montierten Spleißes 46 ebenfalls eine Aushebeöffnung 31 im Boden 10 des Unterteiles 2 auf.

An die andere Seite des Stützteiles 7 schließen sich fünfzehn Führungsnuten 33 an, welche die Aufnahme 13 für fünfzehn Spleiße 46 bilden. Zwischen der letzten Führungsnut 33 für den 15.Spleiß 46 und der Seitenwand 35 des Unterteiles 2 ist wiederum ein Faserführungs-Kanal 36 angeordnet, der durch einen Begrenzungssteg 37 (Fig.4) von der Aufnahme 13 für die Spleiße 46 begrenzt und von den zwei Niederhaltern 8 überdeckt ist. Quer zur Richtung der Führungsnuten 33 ist eine Aushebeöffnung 38 zur Demontage von einzelnen Spleißen 46 aus den Nuten 33 vorgesehen. In einer nicht dargestellten Ausführungsform kann in der Mitte der Aufnahmen 13 für die Spleiße 46 ein zentraler Zuführungskanal für die Glasfasern vorgesehen werden. In diesem Fall sind zwei Aushebeöffnungen 38 vorzusehen, die durch den Zuführungskanal voneinander getrennt sind. Der Zuführungskanal dient der Faserführung an die Ausführung 6 unter Beachtung des Mindestbiegeradius.

Entsprechend der Darstellung in der Fig. 1 ist der hintere Bereich 14 durch die bogenförmigen Wandungsteile 15 zur Faserführung aus und in die Aufnahmen 12,13 begrenzt. Aus der Stirnseite 39 ist der Niederhalter 16 über der Bodendurchführung 17 herausgeformt. Die Bodendurchführung 17 ist in gleicher Weise wie die Bodendurchführung 9 im Eingangsbereich 3 ausgebildet. Die Bodendurchführung 17 des hinteren Bereiches 14 dient der Herausführung bzw. Hereinführung von Glasfasern aus einem anderen Gehäuseunterteil (Fig. 7).

Entsprechend den Darstellungen in den Fig. 1 und 2 ist das Gehäuseunterteil 2 auf seiner Oberseite mit einem umlaufenden Steg 40 und auf seiner Unterseite mit einem umlaufenden Absatz 41 jeweils gleicher Dimensionierung versehen, die beim Übereinanderstapeln von Gehäuseunterteilen 2 ineinander greifen und so eine zuverlässige Fixierung der Unterteile 2 gewährleisten sowie eine Verringerung der Bauhöhe bewirken (Fig. 9,10).

In den Fig. 6 und 7 sind in Draufsichten mit Kopplern 45 und Spleißen 46 bestückte Gehäuseunterteile 2 dargestellt, die gemäß der Schnittdarstellung in Fig. 9 übereinandergestapelt und mit dem Deckel 42 zu einer Kopplereinheit komplettiert sind. Die Fig. 8 zeigt die Draufsicht auf eine solche Kopplereinheit. In der Fig.7 ist das untere Unterteil 2 der Kopplereinheit gemäß der Fig.10 dargestellt. In dem dargestellten Fall ist eine Glasfaser über den oberen Einführungsschlitz 18 der Einzelausführungen 6 in das Unterteil 2 eingeführt und über die S-förmige Nut 20 so geleitet, daß die Wickelrichtung sich verändert und nach dem Spleißvorgang ebenfalls über die Einzelausführungen 6 herausgeführt werden kann. Dadurch können die Glasfasern auf engem Raum vom Kopplergehäuse aus weitergeführt werden. Es kann, wie in der Fig.7 dargestellt ist, eine Glasfaser aus der Bodendurchführung 17 heraus und in das darüberliegende Unterteil 2 gemäß der Darstellung in der Fig.6 hineingeführt und dort weiter gespleißt werden. Im Bereich der Spleiße 46 werden die Glasfasern mittels der Niederhalter 34 fixiert. Die Niederhalter 34 werden durch Klebestreifen gebildet, welche auf die Sekundärummantelung der zwischen den Spleißen 46 plazierten und parallel geführten Glasfasern wirken und diese in die Spleiße 46 hineindrücken. Die Stärke der Klebestreifen ist so gewählt, daß der Raum zwischen den Glasfasern und einem aufgebrachten Deckel 42 oder einem weiteren Unterteil 2 ausgefüllt ist. Bei Temperaturänderungen können sich die Glasfasern im nach dem Spleißbereich folgenden Bereich unter Beibehaltung des Mindestbiegeradius ausdehnen ( Pistoning-Effekt ).

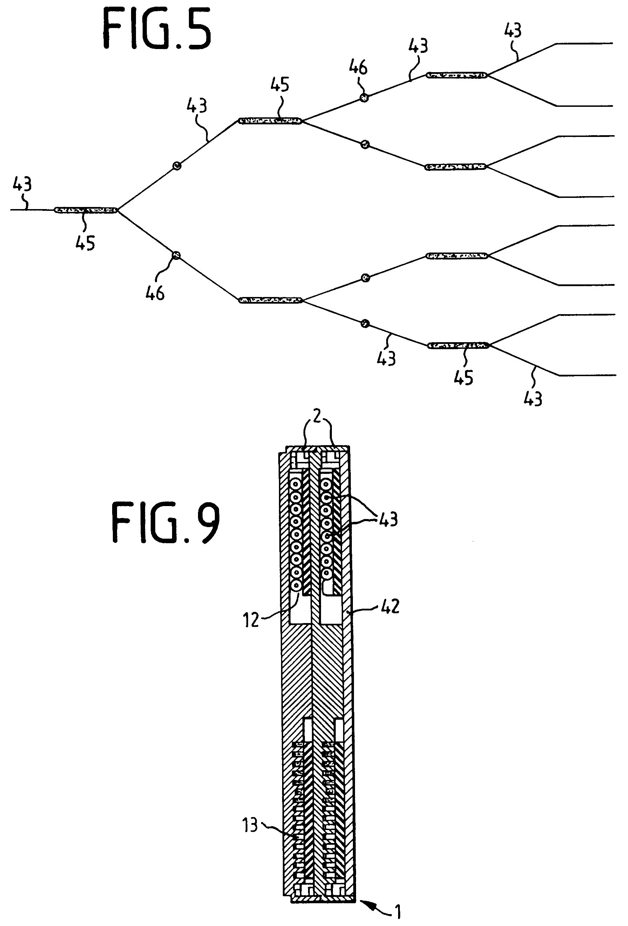

In der Fig.5 ist ein beispielhafter Aufbau einer Kopplerkaskade 1x8 zur Bestückung des Gehäuses 1 dargestellt. Eine Faser 43 wird zu acht Fasern 43. Dazu ist die Glasfaser 43 in einem ersten Koppler 45 in zwei Fasern 43 verzweigt. Diese zwei Fasern 43 werden über je einen Spleiß 46 jeweils erneut in je einen Koppler 45 geführt und dort erneut in jeweils zwei Fasern 43 verzweigt, so daß an dieser Stelle über die drei Koppler 45 und die zwei Spleiße 46 bereits vier Fasern 43 verzweigt wurden. Diese vier Fasern 43 werden über weitere vier Spleiße 46 und weitere vier Koppler 45 in insgesamt acht Fasern 43 verzweigt. Je nach Bedarf können Kopplereinheiten von 1x32 und größer realisiert werden. Für diesen Aufbau werden insgesamt vier Gehäuseunterteile 2 ineinander gestapelt.

### BEZUGSZEICHENLISTE

- 1: Gehäuse
- 2: Gehäuseunterteil
- 3: Eingangsbereich
- 4: Stirnseite
- 5: Einzeleinführung
- 6: Einzelausführung
- 7: Stützteil
- 8: Niederhalter
- 9: Bodendurchführung
- 10: Boden
- 11: Zentralbereich
- 12: Aufnahme für Koppler
- 13: Aufnahme für Spleiße
- 14: hinterer Bereich
- 15: Wandungsteil
- 16: Niederhalter
- 17: Bodendurchführung
- 18: Einführungsschlitz
- 19: Einführungsschräge
- 20: S-förmige Nut
- 21: Trapezführung
- 22: Kennzeichnung
- 23: Bohrungen
- 24: Führungsnut
- 25: Führung
- 26: Faserführungs-Kanal
- 27: Seitenwand
- 28: Begrenzungssteg
- 29: Fläche
- 30: Aushebeöffnung
- 31: Aushebeöffnung
- 32: Bohrung
- 33: Führungsnut
- 34: Niederhalter
- 35: Seitenwand
- 36: Faserführungs-Kanal
- 37: Begrenzungssteg
- 38: Aushebeöffnung
- 39: Stirnseite
- 40: umlaufender Steg
- 41: Absatz
- 42: Deckel
- 43: Glasfaser
- 44:
- 45: Koppler
- 46: Spleiß
- 47: Ausnehmung
- 48: Ausnehmung
- 49: Niederhalter

## Patentansprüche

1. Gehäuse für passive optische Komponenten, wie Glasfasern, Koppler, Spleiße, aus Seitenwandungen, Boden, Stirnflächen mit Durchbrüchen, Niederhaltern, Durchführungen im Bodenbereich, Aufnahmen,
**dadurch gekennzeichnet,**
daß an mindestens einer Stirnseite (4,39) zugentlastende Einzelführungen (5,6) für die Glasfasern (43) und eine in den Boden (10) integrierte S-förmige Nut (20) vorgesehen sind und daß die Aufnahmen (12,13) für Koppler (45) und für Spleiße (46) durch mit dem Boden (10) verbundene Führungen (24,33) gebildet sind.

2. Gehäuse nach Anspruch 1, dadurch gekennzeichnet, daß zwischen den Aufnahmen (12,13) und den Seitenwänden (27,35) Faserführungs-Kanäle (26,36) vorgesehen sind und daß im Bereich der Aufnahmen (12,13) Aushebeöffnungen (30,38) in den Boden (10) eingebracht sind.

3. Gehäuse nach Anspruch 1, dadurch gekennzeichnet, daß die Einzelführungen (5,6) Einzeleinführungen (5) und Einzelausführungen (6) bilden und mit Ein- und Ausführungsschlitzen (18) versehen sind, die konisch so gestaltet sind, daß ihre obere Breite geringfügig größer ist als der Durchmesser der ein- und auszuführenden Glasfasern (43).

4. Gehäuse nach Anspruch 3, dadurch gekennzeichnet, daß die Konizität der Ein- und Ausführungsschlitze (18) 4° bis 7° beträgt.

5. Gehäuse nach Anspruch 1, dadurch gekennzeichnet, daß die Einzelein- und Einzelausführungen (5,6) in die Stirnseite (4) integriert sind.

6. Gehäuse nach Anspruch 1, dadurch gekennzeichnet, daß die Einzelein- und Einzelausführungen (5,6) gesonderte Bauteile bilden, die in die Stirnseite (4) eingebracht sind.

7. Gehäuse nach Anspruch 1, dadurch gekennzeichnet, daß zwischen der Aufnahme (12) für die Koppler (45) und dem Faserführungs-Kanal (26) mindestens eine Führung (25) für einen weiteren Spleiß (46) angeordnet ist.

8. Gehäuse nach Anspruch 7, dadurch gekennzeichnet, daß im Bodenbereich der Führung (25) eine Aushebeöffnung (31) angeordnet ist.

9. Gehäuse nach Anspruch 2, dadurch gekennzeichnet, daß die Faserführungs-Kanäle (26,36) mit aus den Seitenwänden (27,35) herausgeformten Niederhaltern (8) überdeckt sind.

10. Gehäuse nach Anspruüch 1, dadurch gekennzeichnet, daß im Bereich der Aufnahme (12) für die Koppler (45) die Führungen (24) durch eine Fläche (29) unterbrochen sind.

11. Gehäuse nach Anspruch 1, dadurch gekennzeichnet, daß im Bodenbereich der Aufnahmen (12,13) Kennzeichnungen (22) für die Führungen (24,33) vorgesehen sind.

12. Gehäuse nach Anspruch 1, dadurch gekennzeichnet, daß die Bodendurchführungen (9,17) gegenüberliegende Ein- und Ausführungsvertiefungen aufweisen.

13. Gehäuse nach Anspruch 1, dadurch gekennzeichnet, daß auf der Unterseite des Bodens (10) ein umlaufender Absatz (41) eingebracht ist.

14. Gehäuse nach Anspruch 1, dadurch gekennzeichnet, daß auf der Oberseite der Wandungen (4,27,35,39) ein umlaufender Steg (40) aufgebracht ist.

15. Gehäuse nach Anspruch 1, dadurch gekennzeichnet, daß Unterteile (2) und ein formschlüssig und bündig mit der Oberkante des Unterteiles (2) abschließender Deckel (42) vorgesehen sind.

16. Gehäuse nach Anspruch 1, dadurch gekennzeichnet, daß über die Koppler (45) und über die Spleiße (46) Niederhalter (34) aufgebracht sind.

17. Gehäuse nach Anspruch 15, dadurch gekennzeichnet, daß die Unterteile (2) stapelbar sind.

18. Gehäuse nach Anspruch 1, dadurch gekennzeichnet, daß in der Aufnahme (13) für die Spleiße (46) ein zentraler Führungskanal zur Führung der Glasfasern (43) an die Einzelausführungen (6) vorgesehen ist.

19. Gehäuse nach Anspruch 1, dadurch gekennzeichnet, daß die einzuführenden und die auszuführenden Glasfasern (43) voneinander getrennt oder zusammen in den Einzelführungen (5,6) abgelegt sind.

20. Gehäuse nach Anspruch 1 dadurch gekennzeichnet, daß in einem in den Boden integrierten Stützteil (7) eine Bohrung (32) zur Verschraubung der Gehäuse (1) miteinander im modularen Aufbau ohne Inanspruchnahme des Deckels (42) vorgesehen ist.

21. Gehäuse nach Anspruch 16, dadurch gekennzeichnet, daß die Niederhalter (34) auf der äußeren Ummantelung der zwischen den Spleißen (46) parallel geführten Glasfasern (43) aufliegen, so daß eine Längenausdehnung zwischen der primären und sekundären Ummantelung der Glasfasern (43) möglich ist (Pistoning-Effekt).
